# EUROPÄISCHE PATENTSCHRIFT

(11) **EP 0 957 019 B1**
(45) Veröffentlichungstag und Bekanntmachung des Hinweises auf die Patenterteilung: **17.03.2004**
(21) Anmeldenummer: 99890153.2
(22) Anmeldetag: 17.05.1999
(51) Int. Cl.: B61D 19/00, B60J 5/06

(54) **Schwenkschiebetür für Fahrzeuge**
Pivotable sliding door for vehicles
Porte coulissante et pivotante pour véhicules

(30) Priorität: 15.05.1998 AT 84298
(43) Veröffentlichungstag der Anmeldung: 17.11.1999
(73) Patentinhaber: Knorr-Bremse Gesellschaft mit beschränkter Haftung, 2340 Mödling (AT)
(72) Erfinder: Ritt, Alois, 3300 Amstetten (AT)
(74) Vertreter: Patentanwälte BARGER, PISO & PARTNER

(56) Entgegenhaltungen:
- EP-A- 0 134 971
- EP-A- 0 259 568
- EP-A- 0 492 743
- EP-A- 0 536 528
- EP-A- 0 875 434

## Beschreibung

Die Erfindung betrifft eine Schwenkschiebetür für Fahrzeuge zur Personenbeförderung nach dem einleitenden Teil des Anspruches 1.

Eine solche Türe ist aus der, allerdings nicht vorveröffentlichten, EP 0 875 434 A bekannt. Es wird gemäß dieser Druckschrift die Ausstellbewegung des Türflügels mit der Längsbewegung durch einen Hebel, der einerseits an Schwenkplatten und andererseits an einem am zugeordneten Türbaumrohr befestigten Arm angreift, koordiniert bzw. koreliert.

Eine ähnliche Tür ist aus der tatsächlich vorveröffentlichten EP 0 536 528 B, entsprechend der DE 41 33 179 A1, bekannt. Bei dieser Vorrichtung wird die Längsbewegung des Türblattes mit der Querbewegung des Führungselementes durch eine mit dem Türrahmen fest verbundene Führungsschiene koordiniert, in die ein mit dem Türblatt fest verbundenes Führungsstück eingreift. Das Reaktionsmoment des Antriebes wirkt auf einen "Spreizelement" genannten Teil, der seiner seits wiederum in einem türrahmenfesten Stützteil abgestützt ist.

Die in beiden Vorrichtungen notwendigen vielfachen Abstützungen, Führungen, Befestigungen und somit Bezugnahmen zwischen dem eigentlichen Türblattantrieb und dem zugehörigen Führungsmechanismus einerseits und türrahmen festen Te ilen andererseits machen beide Konstruktionen in ihrem Einbau und der Justierung unangenehm und aufwendig.

Es darf dabei nicht außer acht gelassen werden, daß für jedes Türblatt ein Türbaumrohr vorgesehen ist, um das Türblatt sowohl in seinem oberen als auch in seinem unteren Bereich führen zu können, da der "Führungselement" genannte Teil bei den vorbekannten Lösungen eigentlich reine Tragfunktion aufweist und die Führung des Türblattes ausschließlich durch das Türbaumrohr, seine Schwenkarme und zugehörige Schienen im Türblatt erfolgt. Es ist somit auch die Verdrehung des Türbaumrohres mit dem Antrieb zu koordinieren.

Bei der vorbekannten Lösung gemäß der EP 0 536 528 B ergibt sich durch die spezielle Wahl des Gelenkviereckes noch das Problem, daß die Tür auch im geschlossenen Zustand bei stromlosem Antrieb geöffnet werden kann, wenn entsprechende Kräfte auf das Türblatt wirken, was beispielsweise durch Vandalenakte, aber auch durch normale Erschütterungen während der Fahrt oder durch ältere oder gebrechliche Personen, die sich am Türblatt abstützen, erfolgen kann, aber aus Sicherheitsgründen unbedingt zu vermeiden ist. Aus diesem Grund sieht die vorbekannte Lösung einen speziellen Verriegelungsmechanismus vor, der einen weiteren genau zu justierenden Befestigungspunkt am Türrahmen erforderlich macht. All dies trägt wohl dazu bei, daß die vorbekannte Schwenkschiebetüre in der Praxis bis jetzt nicht eingesetzt worden ist.

Eine Tür ähnlich der der eingangs genannten Art ist auch aus der EP 0 492 743 A1 bekannt. Der Türantrieb ist dabei einerseits in einer fixen Führung gelagert, anderseits mit einem teleskopierbaren System über eine Reihen von Armen und Stangen verbunden.

Es benötigt somit auch diese Türe einen hohen Justier- und Instandhaltungsaufwand und ist auch in der Herstellung aufwendig. Im Gegensatz zur Tür gemäß der EP 0 536 528 B1 ist sie aber durch einen Über-Totpunkt-Mechanismus im geschlossenen Zustand gegen unbeabsichtigtes Öffnen geschützt und kann somit kraftlos geschaltet werden.

Die Erfindung bezweckt, die Nachteile der vorbekannten Lösungen zu vermeiden und eine Schwenkschiebetür zu schaffen, die einfach und rasch zu montieren und zu justieren ist und die in einer bevorzugten Ausgestaltung auch ohne Verriegelungsmechanismus gegen ein versehent liches Öffnen gesichert ist.

Erfindungsgemäß sind dazu die im kennzeichnenden Teil des Anspruches 1 angeführten Merkmale vorgesehen.

Damit wird im Vergleich zum Stand der Technik eine Verringerung der Anzahl der Bauteile und eine wesentliche Vereinfachung der Justierung der Bauteile zueinander erreicht. Gegenüber Betätigungsmechanismen für das Türbaumrohr, die nach dem Über-Totpunkt-Prinzip arbeiten, ist der Justieraufwand und der Wartungsaufwand für bewegte Teile drastisch reduziert.

Vorteilhafte Weiterbildungen sind in den Unteransprüchen angeführt.

So kann die Koordinierung des Ablaufes der Ausstell-Öffnungsbewegung dabei durch eine wagenkastenfeste Schiene oder durch einen Schwenkmechanismus, wie er in der noch unveröffentlichten österreichischen Patentanmeldung A 735/97 der Anmelderin beschrieben ist, bewerkstelligt werden. In dieser noch nicht veröffentlichten Patentanmeldung der Anmelderin wird eine ähnliche Konstruktion vorgeschlagen, bei der Steuerarme für das Verschwenken des Türbaumrohres an den Schwenkplatten angelenkt sind und bei der die Koordinierung der Längsbewegung des Türblattes mit der Querbewegung des Führungselementes durch eine um eine wagenkastenfeste Achse schwenkbare Gabel erfolgt, in die einerseits ein mit dem Türblatt festverbundenes Führungsmittel eingreift und die anderseits mit einem Führungszapfen in einen Führungsschlitz des Führungselementes eingreift, wodurch auf die wagenkastenfeste Führungsschiene verzichtet werden kann.

Der Vorteil des Schwenkmechansimus liegt darin, daß er weniger Platz als die Führungsschiene benötigt, sein Nachteil ist, daß er mehr bewegliche Teile umfaßt, die gewartet und zueinander justiert werden müssen.

Die Erfindung wird - im folgenden an Hand der Zeichnung näher erläutert. Dabei zeigt
die Fig. 1 eine schematische Draufsicht auf eine erfindungsgemäße Schwenkschiebetür im geschlossenen Zustand,
die Fig. 2 die Schwenkschiebetüre der Fig. 1 in geöffnetem Zustand,
die Fig. 3 den Drehmechanismus in einer Ansicht in Richtung des Pfeiles III, teilweise im Schnitt, im geschlossenen Zustand,
die Fig. 4 eine Ansicht gemäß Fig. 3 im geöffnetem Zustand,
die Fig. 5 eine Draufsicht auf den Antrieb, im geschlossenen Zustand,
die Fig. 6 eine Draufsicht analog zur Fig. 5 im geöffnetem Zustand,
die Fig. 7 einen Koordinierungsmechanismus im geschlossenen Zustand und
die Fig. 8 den Mechanismus der Fig. 7 im geöffenten Zustand der Tür.

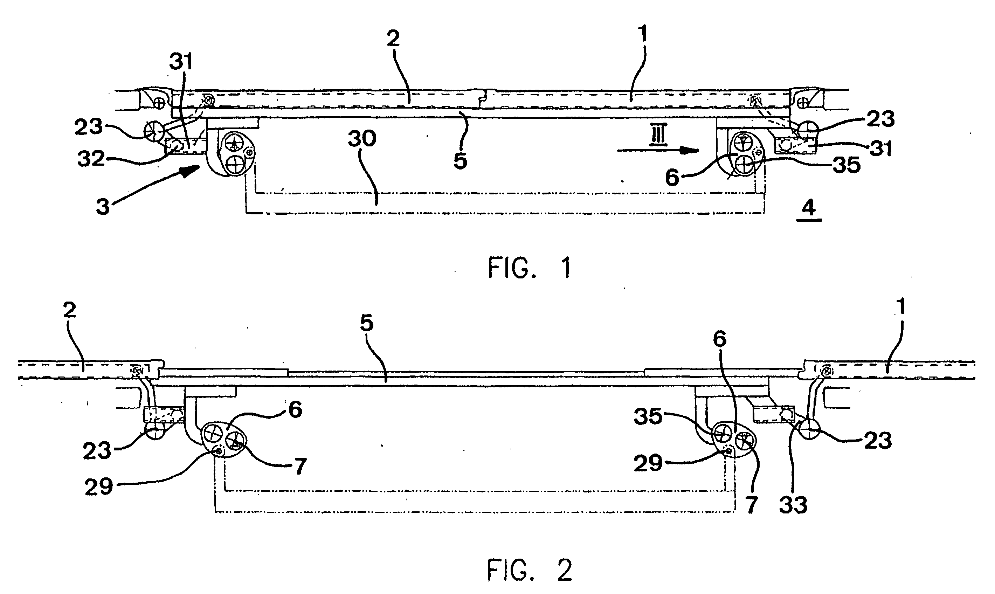

In Fig. 1 ist eine Schwenkschiebetür mit zwei Türblättern 1, 2 und einem insgesamt mit 3 bezeichneten Türantriebsmechanismus dargestellt. Unter Türantriebsmechanismus werden all die Bauteile verstanden, die weder fest und starr mit einem der Türblätter noch fest und starr mit dem Wagenkasten 4 verbunden sind. Bauteile, die beweglich an einem Türblatt und/oder am Wagenkasten angelenkt sind, sind Teil des Türantriebsmechanismus.

Die Türblätter 1, 2 gleiten, wie aus dem Zusammenhalt der Fig. 1 und 2 ersichtlich ist, auf einem teleskopartigen Führungselement 5, das im Zuge der Öffnungsbewegung der Tür eine Bewegung normal zur Ebene der Türblätter vollführt. Diese Querbewegung wird durch das Verschwenken eines Gelenksparallelogramms ermöglicht, das einerseits aus dem Führungselement 5 besteht, anderseits aus zwei Schwenkplatten 6 und schließlich aus den zwischen den wagenkastenfesten Drehachsen 7 der Schwenkplatten 6 liegenden Wagenkastenteilen.

Auf den Schwenkplatten 6 ist auch der eigentliche Antrieb 3, im wesentlichen parallel zum Führungselement 5 verlaufend, gelagert, so daß auch er mit den Schwenkachsen 7 ein Gelenkparallelogramm bezüglich des Wagenkastens 4 bildet und im Zuge der Öffnungsbewegung eine (translatorische) Verschwenkung um diese (bezüglich des Wagenkastens beweglichen) Drehachsen 29 vollführt.

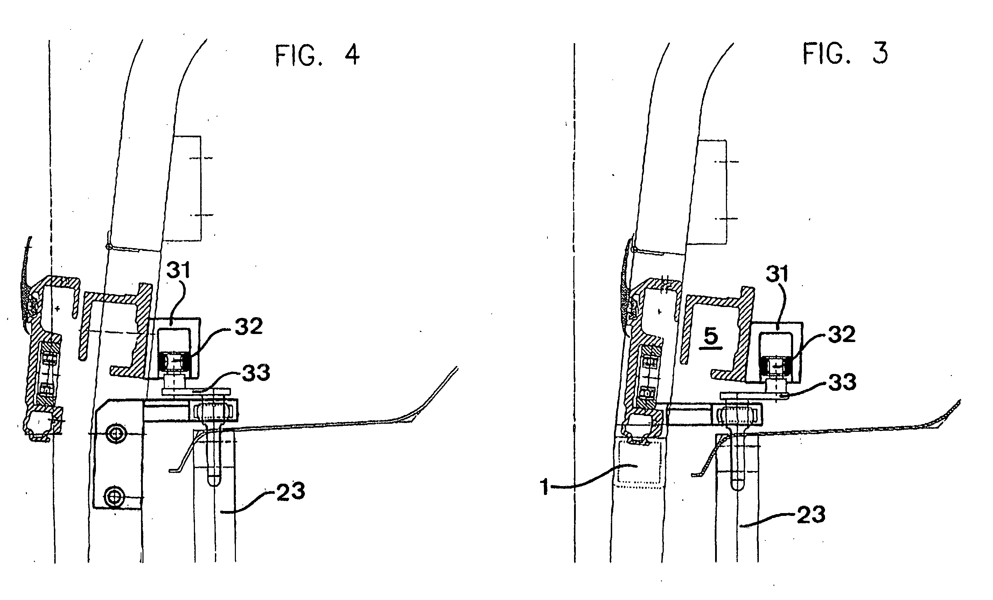

Beim Öffnen der Türe verdrehen sich die Schwenkplatten 6 um ihre jeweiligen Achsen 7 und bewegen dabei das als Teleskop ausgebildete und die Türblätter tragende Führungselement 5 nach Außen. Erfindungsgemäß tragt das Führungselement 5 im Bereich jedes Türbaumrohres 23 eine Gleitführung 31, in der eine Rolle, ein Zapfen od.dergl. 32, der an einem Arm 33 des Türbaumrohres 23 gelagert ist, geführt wird. Der Arm 33 ist drehfest mit dem Türbaumrohr verbunden, das seinerseits auf an sich bekannte Weise die Türblätter 1, 2 während deren translatorischer Bewegung führt (Fig. 1 bis 4).

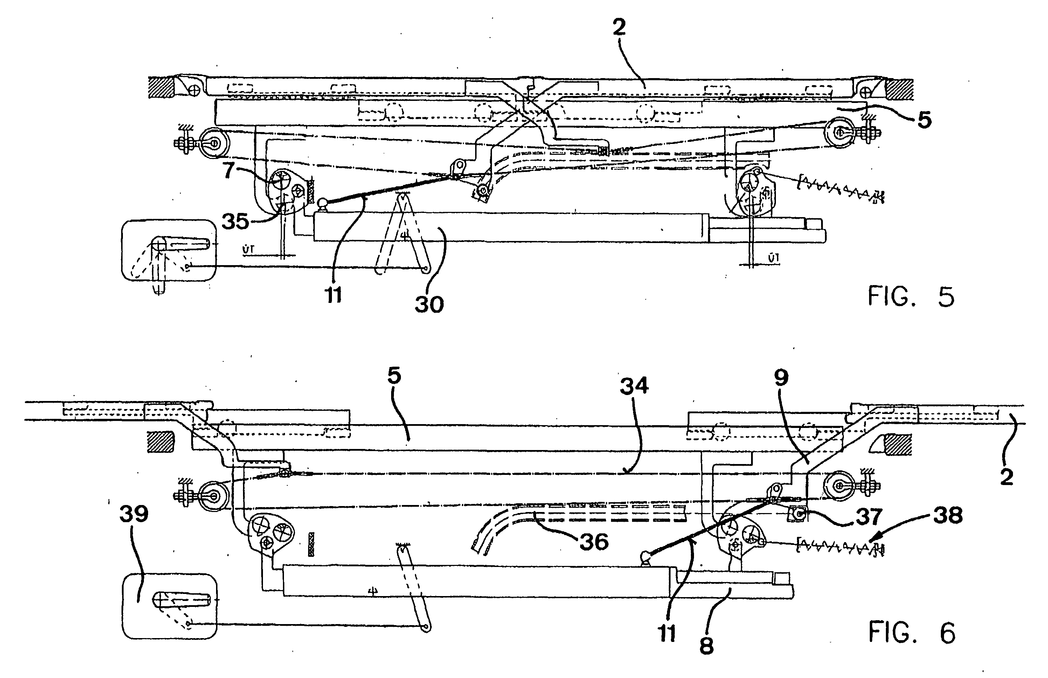

Wie insbesondere aus Fig. 5 und 6 hervorgeht, besteht im dargestellten Ausführungsbeispiel der Antrieb 30 aus einem Elektromotor 8, einer (nicht dargestellten) Spindel und einem auf Rollen geführten Mutterwagen, der über einen Antriebsarm 11 an einem Arm 9 des Türblattes 2 angreift.

Die Kraftübertragung auf das zweite Türblatt 1 erfolgt über einen an sich bekannten Seilumlaufmechansimus 34, der für den Fachmann keiner näheren Erläuterung bedarf.

Aus Fig. 5 ist ersichtlich, daß das Führungselement 5 mit seinen Drehachsen 35, den Schwenkplatten 6 und deren Drehachsen 7 einen Über-Totpunkt-Mechanismus bildet, der im geschlossenen Zustand der Türe verhindert, daß sich diese bei kraftlos geschaltetem Antrieb 30 öffnen kann. Jede Krafteinwirkung auf eines der beiden Türblätter 1,2 wirkt sich auf das Führungselement als Ausstellkraft aus, und damit als Moment im Gegen-Uhrzeigersinn auf die Schwenkplatten, was der Schließrichtung entspricht.

Die Koordination der Ausstell-Einfahr-Bewegung erfolgt bei dem in Fig. 5 gezeigten Ausführungsbeispiel auf an sich bekannte Weise über eine wagenkastenfeste Schiene 36, die mit einer Führungsrolle 37 am Arm 9 zusammenwirkt.

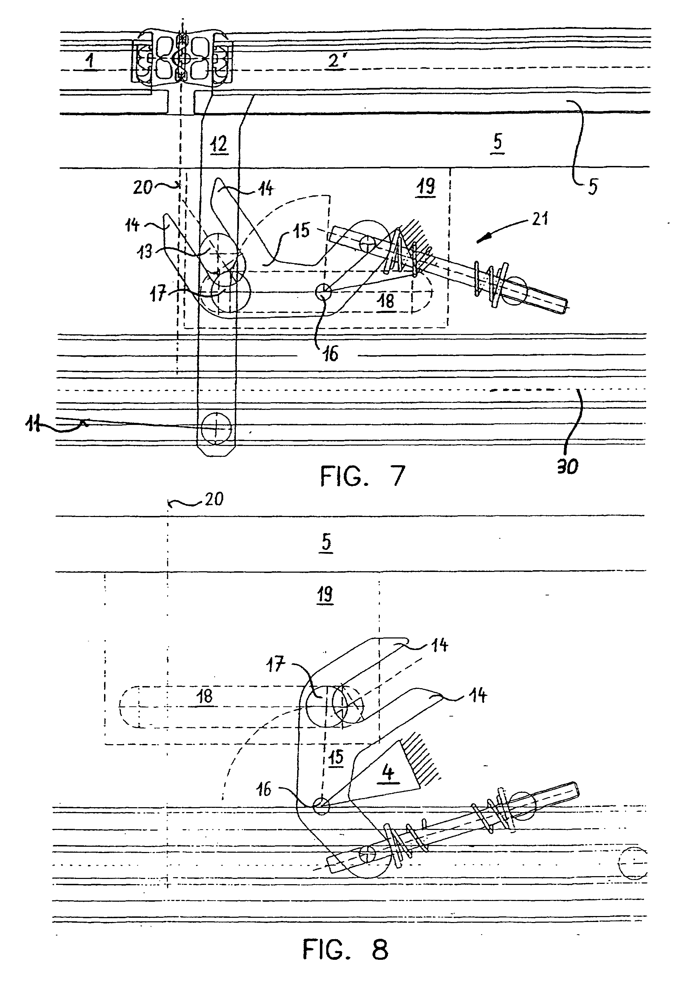

Eine Alternative zu diesem Koordinierungsmechansimus ist in den Fig. 7 und 8 dargestellt: Ein Arm 12 eines Türblattes 2' trägt einen Zapfen bzw. eine Rolle 13, die in die Ausnehmung zwischen die Zinken 14 einer Schwenkgabel 15 zu liegen kommt. Die Schwenkgabel 15 ist um eine wagenkastenfeste Achse 16 schwenkbar und trägt ihrerseits einen Führungsfinger 17, der in einen Schlitz 18 einer Führungsplatte 19 eingreift, die mit dem Führungselement 5 fest und starr verbunden ist.

Wird nun zum Öffnen der Türantrieb 30 aktiviert, so setzt der Motor 8 die Spindel in Bewegung und der Mutterwagen belastet den Antriebsarm 11 auf Druck und versucht so das Türblatt 2' aufzuschieben. Dies wird durch die Führungsrolle 13, die ja türblattfest angeordnet ist-und die in die Schwenkgabel 15 eingreift, verhindert, so daß durch die Reaktionskraft des Antriebes der gesamte Antrieb 30 bezüglich des Wagenkastens 4 (in der Zeichnung gesehen) nach links geschoben und um die Schwenkachsen 7 im Uhrzeigersinn verdreht wird.

Da durch diese Schwenkbewegung der Schwenkplatten 6 auch das Führungselement 5 verschwenkt wird, kommt es zu dessen Ausstellbewegung, wobei sein Längsschlitz 18 den Führungsfinger 17 der Drehgabel 15 mitnimmt und so das Verdrehen der Drehgabel 15 bewirkt, wodurch nach erfolgter vollständiger Ausstellbewegung des Führungselementes 5 die Führungsrolle 13 des Türblattes 2 aus dem Bereich der Zinken 14 der nunmehr verdrehten Drehgabel 15 kommt, was es dem Antrieb erlaubt, das Türblatt 2' nun über den Antriebsarm 11 in Öffnungsrichtung entlang des Führungselementes 5 zu verschieben.

Die Koordinierung der Bewegung des zweiten Türblattes 1 erfolgt bevorzugt analog zum Mechanismus gemäß den Fig. 5 und 6 durch ein umlaufendes Seil oder einen Zahnriemen od.dgl., wobei das Türblatt 1 an einem der beiden Trume, das Türblatt 2' am anderen angelenkt ist, so daß sichergestellt ist, daß die beiden Türblätter stets symmetrisch bezüglich der Symmetrieebene 20 positioniert sind.

In der dargestellten Variante ist die Führungsgabel 15 durch einen Federmechanismus 21 so belastet, daß sie unter der Wirkung dieses Federmechanismus 21 stets in eine der zwei möglichen Endlagen gedrängt wird. Auf diese Weise ist sichergestellt, daß durch Erschütterungen od.dgl. bei offener Tür die Schwenkgabel nicht die in Fig. 4 dargestellte Winkellage verläßt, deren Einhaltung notwendig ist, damit der Führungszapfen 13 des Türflügels 2 beim Schließen wieder in den Bereich der Zinken 14 gelangt und ein ordungsgemäßes Schließen der Türe ermöglicht.

Bei der in Fig. 7 dargestellten, der geschlossenen Lage der Türe entsprechenden Situation des Gabelmechanismus unterstützt der Federmechanismus 21 das Einhalten der Schließlage, was aber, wie weiter unten erläutert, primär und im wesentlichen auf andere Weise erfolgt, so daß es auch möglich ist, statt des Federmechanismus 21 eine Torsionsfeder im Bereich des wagenfesten Lagers 16 der Drehgabel 15 vorzusehen, die die Drehgabel 15 in die der offenen Lage entsprechende Position drängt, die in Fig. 4 dargestellt ist.

Die Erfindung macht, wie an sich bekannt, das Vorsehen einer Notbetätigungsvorrichtung 39 notwendig, die erfindungsgemäß entweder, wie dargestellt, auf den Antrieb 30 oder auf eine der Schwenkplatten 6 im Sinne der Öffnungsbewegung der Türe wirkt und so auch bei stromlosem Motor 8 ein Öffnen der Tür ermöglicht.

Es ist in einer bevorzugten, Ausgestaltung möglich, das Halten der Über-Totpunkt-Lage durch eine Feder zu erleichtern, die auf das Türbaumrohr oder die Schwenkplatte oder einen anderen (bzw. zwischen zwei) Bauteilen des Türantriebes in Schließrichtung wirkt. Dies ist insbesondere für den Notbetrieb bei ausgefallenem Antrieb vorteilhaft.

In den Fig. 5, 6 ist ein derartiger Mechanismus 38, der auf eine der Schwenkplatten 6 wirkt, dargestellt. Dieser Mechansimus ist als eine Art Kniehebelmechnismusa asugebildet und drückt die Schwenkplatte 6 immer weg vom Totpunkt, unterstützt somit sowohl das Schließen als auch das Öffnen, wenn nur erst der Totpunkt erreicht ist.

Die Erfindung ist nicht auf das dargestellte Ausführungsbeispiel beschränkt, sondern kann verschiedentlich abgewandelt werden. So ist es möglich, statt des Spindelantriebes einen anderen Linearmotor zu verwenden oder durch eine kinematische Umkehr die Situation bei der Drehgabel 15 zu verändern, wenn beispielsweise mit dem Führungselement 5 verbunden ein Zapfen, Dorn, Finger od.dgl. vorgesehen ist und die Schwenkgabel 15 mit einer entsprechend geformten schlitzartigen Führung versehen wird.

Analog zu einer solchen Umkehr könnte auch der Arm 33 des Türbaumrohres 23 eine Führung 31 tragen (oder als solche ausgebildet sein) und das Führungelement 5 eine Rolle, auch könnte der Arm, der die Türblattführung trägt, auch als Arm für die Rolle 32 verwendet werden.

Im gezeigten Ausführungsbeispiel ist der Antriebsarm 11 bzw. sein Angriffspunkt am Türarm 12 so gewählt, daß er im Zuge der Öffnungs- bzw. Schließbewegung möglichst wenig zu beiden Seiten von der Richtung des Linearantriebes 30 abweicht. Es ist bei speziellen Einbausituationen selbstverständlich denkbar, den Angriffspunkt näher zum Türblatt 2 oder weiter weg von ihm zu legen, so daß der Arm 11 immer nur auf einer Seite der Antriebsrichtung zu liegen kommt. Es ist für spezielle Fälle auch denkbar, den Antriebsarm 11 drehfest mit dem Mutterwagen zu verbinden und im Türarm 12 eine schlitzförmige Führung vorzusehen, entlang der sich der Angriffspunkt des Antriebsarmes 11 während der Öffnungs- bzw. Schließbewegung bewegt.

Das Ende der Schließbewegung kann durch einen Anschlag justierbar vorgegeben sein, es muß dieser Anschlag nicht wagenkastenfest angeordnet sein, sondern kann auch durch eine justierbare Verdrehbeschränkung zwischen dem Antrieb 30 und der Schwenkplatte 6 oder zwischen dem Führungselement 5 und der Schwenkplatte 6 oder anderen, im Zuge der Öffnungs- und Schließbewegung relativ zueinander beweglichen Teilen, ersetzt werden.

Wie aus der Fig. 1 und 2 leicht ersichtlich, können alle wagenkastenfeste, mit dem Türmechanismus 3 zusammenwirkenden Teile leicht auf einer schlanken und wenig Platz gebrauchenden Montageplatte oder einem Montageprofil vorgesehen werden, so daß letztlich nur dieses Montageprofil bzw. diese Montageplatte mit dem Wagenkasten verbunden werden muß, um den gesamten Mechanismus 3 einzubauen.

## Patentansprüche

1. Schwenkschiebetür für.Fahrzeuge zur Personenbeförderung mit zumindest einem Türblatt (1, 2, 2'), das in seiner Längsrichtung auf einem Führungselement (5) verschiebbar ist, das als Teil eines Gelenkparallelogramms (5,6) quer zur Ebene des Türblattes bewegbar ist, wobei eine Antriebsvorrichtung (30) am Türblatt (2) angreift und wobei die Reaktionskraft der Antriebsvorrichtung (30) das Führungselement (5) quer zur Türblattebene bewegt, wobei der im wesentlichen parallel zum Führungselement (5) verlaufende Antrieb (30) auf am Wagenkasten (4) des Fahrzeuges um Schwenkachsen (7) drehbar gelagerten, bevorzugt als Schwenk platten (6) ausgebildeten, Schenkeln gelagert ist, und wobei jedem Türblatt (1, 2) ein Türbaumrohr (23) zugeordnet ist, **dadurch gekennzeichnet, daß** an den Endbereichen des Führungselementes (5) die einem Türbaum rohr (23) benachbart sind, jeweils eine Gleitführung (31) befestigt ist, die mittels eines Verbindungsgliedes, wie Rolle (32) od.dergl., das drehfest mit dem Türbaumrohr (23) verbunden ist, dieses unmittelbar in Drehbewegung versetzt.

2. Schwenkschiebetür nach Anspruch 1, **dadurch gekennzeichnet, daß** die Koordinierung der Längsbewegung des Türblattes (2) mit der Querbewegung des Führungselementes (5) durch eine um eine wagenkastenfeste Achse (16) schwenkbare Gabel (15) erfolgt, zwischen deren Zinken (14) ein mit dem Türblatt (2) festverbundenes Führungsmittel (13) eingreift und daß die schwenkbare Gabel (15) mit einem Führungszapfen (17) in einen Füh rungsschlitz (18) des Führungselementes (5) eingreift.

3. Schwenkschiebetür nach einem der vorstehenden Ansprüche, **dadurch gekennzeichnet, daß** die schwenkbare Gabel (15) nach Art eines Totpunktmechansimus unter der Wirkung eines Federmechanismus (21) steht, der sie, je nach Lage, in die eine oder die andere ihrer Endlagen zu bringen sucht.

4. Schwenkschiebetür nach einem der vorstehenden Ansprüche, **dadurch gekennzeichnet, daß** die schwenkbare Gabel (15) unter der Wirkung einer Feder, bevorzugt einer Torsionsfeder, steht, die sie in die Endlage zu schwen ken sucht, die der Tür-offen-Stellung entspricht.

5. Schwenkschiebetür nach einem der vorstehenden Ansprüche, **dadurch gekennzeichnet, daß** die Schwenkachsen (7) der Schwenkplatten (6) und die Schwenkachse (16) der Gabel (15), sowie gegebenenfalls das wagenkastenseitige Lager des Federmechanismus (21) und ein bevorzugt justierbarer Endanschlag auf einer Montageplatte bzw. einem Montageprofil montiert sind.

6. Schwenkschiebetür nach Anspruch 1, **dadurch gekennzeichnet, daß** die Koordinierung der Längsbewegung des Türblattes (2) mit der Querbewegung des Führungs elementes (5) durch eine wagenkastenfeste Führung (36) erfolgt, die eine fest mit dem Türflügel (2) verbun dene Rolle (37) führt und daß, wenn vorhanden, ein zweiter Türflügel durch einen Seilumlaufmechansimus (34) synchron mit dem Türflügel (2) bewegt wird.

7. Schwenkschiebetür nach Anspruch 6, **dadurch gekennzeichnet, daß** die Schwenkachsen (7) der Schwenkplatten (6), die Führung (36), die Drehachsen des Seilumlaufmechansimus (34), sowie gegebenenfalls ein bevorzugt justierbarer Endanschlag auf einer Montageplatte bzw. einem Montageprofil montiert sind.

8. Schwenkschiebetür nach einem der vorstehenden Ansprüche, **dadurch gekennzeichnet, daß** zumindest eine Feder (38), die bevorzugt am Türbaumrohr (23) oder den Schwenkplatten (6) angreift und den Türmechansimus (3) in die Geschlossen-Lage drängt, vorgesehen ist.

9. Schwenkschiebetür nach einem der vorstehenden Ansprüche, **dadurch gekennzeichnet, daß** eine Notbetätigungsvorrichtung (39) vorgesehen ist, die mittels Bowdenzug od.dergl. in Öffnungsrichtung auf den Antrieb (30) wirkt.

## Claims

1. A swinging-sliding door for vehicles for passenger conveyance, with at least one door leaf (1,2,2') which can slide in a longitudinal direction along a guide element (5) which as part of an articulated parallelogram (5,6) is movable transversely to the plane of the door leaf, wherein a drive mechanism (30) acts on the door leaf (2) and wherein the reaction force of the drive mechanism (30) moves the guide element (5) transversely to the plane of the door leaf, wherein the drive (30) extending substantially parallel to the guide element (5) is mounted on arms which are rotatably mounted about pivot axes (7) on the carriage body (4) of the vehicle and which are preferably in the form of pivot plates (6), and wherein each door leaf (1,2) is associated with a jamb tube (23), **characterised in that** a respective sliding guide (31) is fastened to the end zones of the guide element (5) which are adjacent a jamb tube (23), which sliding guide by means of a connecting member, such as a roller (32) or the like which is connected to the jamb tube (23) in a manner precluding relative rotation, directly imparts rotating motion to the latter.

2. A swinging-sliding door according to Claim 1, **characterised in that** the co-ordination of the longitudinal movement of the door leaf (2) is effected with the transverse movement of the guide element (5) by a fork (15) which is pivotable about a spindle (16) secured to the carriage body and between the prongs (14) of which engages a guide means (13) securely connected with the door leaf (2), and **in that** the pivotable fork (15) engages with a guide pin (17) in a guide slot (18) of the guide element (5).

3. A swinging-sliding door according to any of the preceding Claims, **characterised in that** the pivotable fork (15), in the manner of an over-centre mechanism, is acted upon by a spring mechanism (21) which, depending on its position, endeavours to bring the fork into one or other of its end positions.

4. A swinging-sliding door according to any one of the preceding Claims, **characterised in that** the pivotable fork (15) is acted upon by a spring, preferably a torsion spring, which endeavours to pivot the fork into the end position which corresponds to the door open position.

5. A swinging-sliding door according to any one of preceding Claims, **characterised in that** the pivot axes (7) of the pivot plates (6) and the pivot axis (16) of the fork (15), as well as optionally the bearing of the spring mechanism (21) on the carriage body side, and a preferably adjustable end stop are mounted on a mounting plate or a mounting profile.

6. A swinging-sliding door according to Claim 1, **characterised in that** the co-ordination of the longitudinal movement of the door leaf (2) is effected with the transverse movement of the guide element (5) by a guide (36) secured to the carriage body, which guides a roller (37) securely connected to the door leaf (2), and **in that**, if provided, a second door leaf is moved by a cable-guide mechanism (34) synchronously with the door leaf (2).

7. A swinging-sliding door according to Claim 6, **characterised in that** the pivot axes (7) of the pivot plates (6), the guide (36), the axes of rotation of the cable-guide mechanism (34), as well as optionally a preferably adjustable end stop, are mounted on a mounting plate or a mounting profile.

8. A swinging-sliding door according to any one of the preceding Claims, **characterised in that** at least one spring (38) is provided, which preferably acts on the jamb tube (23) or the pivot plates (6) and urges the door mechanism (3) into the closed position.

9. A swinging-sliding door according to any one of the preceding Claims, **characterised in that** an emergency operation device (39) is provided, which acts on the drive (30) in the opening direction by means of a control cable or the like.

## Revendications

1. Porte coulissante et pivotante pour véhicule de transport de personnes, comportant au moins un vantail de porte (1, 2, 2') qui peut être déplacé en direction longitudinale sur un élément de guidage (5) qui est mobile en tant que partie d'un parallélogramme articulé (5, 6) transversalement au plan du vantail de porte, un dispositif d'entraînement (30) s'engageant sur le vantail (2), et la force de réaction du dispositif d'entraînement (30) déplaçant l'élément de guidage (5) transversalement au plan du vantail de porte, l'entraînement (30) qui s'étend sensiblement parallèlement à l'élément de guidage (5) étant monté sur des branches montées rotatives autour d'axes de pivotement (7) sur la carrosserie (4) du véhicule, et réalisées de préférence sous forme de plaques pivotantes (6), et à chaque vantail de porte (1, 2) étant associé un mât tubulaire de porte (23), **caractérisée en ce que** sur les régions terminales de l'élément de guidage (5), qui sont voisines d'un mât tubulaire de porte (23), est fixé un guidage coulissant (31) respectif relié au moyen d'un organe de liaison, tel qu'une poulie (32) ou similaire, qui est relié de façon solidaire en rotation avec le mât tubulaire de porte (23) et qui fait tourner directement celui-ci.

2. Porte coulissante et pivotante selon la revendication 1, **caractérisée en ce que** la coordination du mouvement longitudinal du vantail de porte (2) avec le mouvement transversal de l'élément de guidage (5) a lieu par une fourche (15) pivotante autour d'un axe (16) solidaire de la carrosserie, un moyen de guidage (13) relié solidaire au vantail de porte (2) s'engageant entre les dents (14) de ladite fourche, et **en ce que** la fourche (15) pivotante s'engage avec un tenon de guidage (17) dans une fente de guidage (18) de l'élément de guidage (5).

3. Porte coulissante et pivotante selon l'une des revendications précédentes, **caractérisée en ce que**, à la manière d'un mécanisme à dépassement de point mort, la fourche (15) pivotante est sous l'effet d'un mécanisme de ressort (21) qui, selon la position, tente de l'amener dans l'une ou dans l'autre de ses positions finales.

4. Porte coulissante et pivotante selon l'une des revendications précédentes, **caractérisée en ce que** la fourche (15) pivotante est sous l'effet d'un ressort, de préférence d'un ressort de torsion, qui tente de la pivoter jusque dans la position finale qui correspond à la position de porte ouverte.

5. Porte coulissante et pivotante selon l'une des revendications précédentes, **caractérisée en ce que** les axes de pivotement (7) des plaques de pivotement (6) et l'axe de pivotement (16) de la fourche (15), ainsi que, le cas échéant, le palier côté carrosserie, du mécanisme à ressort (21), et une butée terminale de préférence ajustable, sont montés sur une plaque de montage ou sur un profil de montage.

6. Porte coulissante et pivotante selon la revendication 1, **caractérisée en ce que** la coordination du mouvement longitudinal du vantail de porte (2) avec le mouvement transversal de l'élément de guidage (5) a lieu grâce à un guidage (36) solidaire de la carrosserie, qui guide une poulie (37) reliée de façon solidaire au vantail de porte (2), et **en ce que**, s'il y en a un, un deuxième vantail de porte est déplacé par un mécanisme de renvoi à câble (34) en synchronisme avec le vantail (2).

7. Porte coulissante et pivotante selon la revendication 6, **caractérisée en ce que** les axes de pivotement (7) des plaques de pivotement (6), le guidage (36), les axes de rotation du mécanisme de renvoi à câble (34) ainsi que, le cas échéant, une butée terminale de préférence ajustable, sont montés sur une plaque de montage ou sur un profil de montage.

8. Porte coulissante et pivotante selon l'une des revendications précédentes, **caractérisée en ce qu'**il est prévu au moins un ressort (38) qui s'engage de préférence sur le mât tubulaire de porte (23) ou sur les plaques de pivotement (6) et qui force le mécanisme de porte (3) dans la position fermée.

9. Porte coulissante et pivotante selon l'une des revendications précédentes, **caractérisée en ce qu'**il est prévu un dispositif d'actionnement de secours (39) qui agit sur l'entraînement (30) au moyen d'un câble Bowden ou similaire dans la direction d'ouverture.
